# FASCICULE DE BREVET EUROPEEN

(11) **EP 2 206 209 B1**
(45) Date de publication et mention de la délivrance du brevet: **09.12.2015**
(21) Numéro de dépôt: 08837431.9
(22) Date de dépôt: 06.10.2008
(51) Int. Cl.: H02J 3/28, H02J 15/00

(54) **INSTALLATION DE PRODUCTION ET DE STOCKAGE D'ÉNERGIE RENOUVELABLE**
ERZEUGUNGS- UND SPEICHERVORRICHTUNG FÜR ERNEUERBARE ENERGIE
RENEWABLE ENERGY PRODUCTION AND STORAGE APPARATUS

(30) Priorité: 09.10.2007 EP 07118132
(43) Date de publication de la demande: 14.07.2010
(73) Titulaire: Swiss Hydrogen SA, 1700 Fribourg (CH)
(72) Inventeur: DURET, Alexis, CH-1007 Lausanne (CH); FRENKEL, Erik Jan, CH-2009 Neuchâtel (CH); CORSON, Don, CH-1400 Yverdon-les-Bains (CH)
(74) Mandataire: Ravenel, Thierry Gérard Louis
(86) Numéro de dépôt international: PCT/EP2008/063346
(87) Numéro de publication internationale: WO 2009/047231

(56) Documents cités:
- DE-A1- 10 055 973
- US-A1- 2005 198 963

## Description

### Arrière-plan de l'invention

La présente invention concerne une installation de production et de stockage d'énergie renouvelable et notamment d'électricité photovoltaïque. La présente invention concerne plus particulièrement une telle installation dans laquelle une partie au moins de l'énergie renouvelable produite est convertie en énergie électrochimique pour son stockage par décomposition de l'eau en hydrogène et oxygène.

Le document de brevet US 2005/109394 décrit une installation du type ci-dessus. L'installation décrite est une installation décentralisée qui est destinée à équiper par exemple une maison, un bâtiment public, un hôpital ou encore une fabrique. Cette installation comporte une unité de production d'hydrogène constituée d'un électrolyseur, d'un compresseur ainsi que d'une bonbonne pour comprimer et stocker l'hydrogène produit par l'électrolyseur ; ce dernier étant alimenté par des panneaux solaires. L'installation comporte encore une pile à combustible pour produire de l'électricité à partir de l'hydrogène, et une unité de commande comprenant un onduleur, un microcontrôleur et un modem. L'électricité produite par la pile à combustible est, soit utilisée sur place, soit injectée dans le réseau.

Une installation comme celle qui vient d'être décrite présente de multiples avantages : l'énergie solaire est une énergie renouvelable disponible partout, l'électrolyseur ne consomme qu'une faible quantité d'eau, la production d'électricité dans la pile à combustible à partir de l'hydrogène ne dégage aucun produit polluant, etc. De plus, l'énergie solaire étant utilisée pour produire de l'hydrogène qui peut être stocké, ce type d'installation permet le stockage de l'énergie solaire sans recours aux traditionnelles batteries dont le prix de revient est considérable.

Les installations du type de celle décrite dans le document susmentionné présentent toutefois certains défauts. En particulier, la production d'hydrogène par électrolyse à l'aide de l'énergie du soleil est beaucoup trop coûteuse pour être concurrentielle. En particulier, à l'heure actuelle, le rendement moyen de la conversion d'énergie solaire en hydrogène ne dépasse pas 6%. Il est donc nécessaire d'équiper les installations d'une surface de panneaux solaires d'autant plus grande que leur rendement est faible. Les coûts d'installation s'en trouvent augmentés d'autant. D'autre part, on sait qu'une pile à combustible alimentée par de l'hydrogène possède un rendement d'environ 60%. Au final, une installation du type ci-dessus ne fournit de l'électricité qu'avec un rendement énergétique moyen inférieur à 4%.

Le document de brevet US 2005/198963 décrit une installation suivant le préambule de la revendication 1.

### Résumé de l'invention

Un but de la présente invention est de réduire le prix de revient de l'électricité fournie par une installation du type ci-dessus en améliorant le rendement énergétique moyen de l'installation. Ce but est atteint en fournissant une installation de production et de stockage d'énergie renouvelable conforme à la revendication 1.

On comprendra que grâce à la présence des moyens de dérivation, une partie de l'électricité produite par les moyens pour générer de l'électricité à partir d'énergie renouvelable peut être consommée directement par l'unité consommatrice d'électricité (cette unité pourrait être notamment une maison, un bâtiment public, un hôpital ou encore, par exemple, une fabrique). Cette partie de l'électricité n'étant pas stockée, elle peut être fournie avec un rendement énergétique amélioré qui atteint même approximativement le double de celui d'une installation comme celle de l'art antérieur décrite plus haut. Selon des statistiques suisses par exemple, une maison équipée d'une installation selon la présente invention, avec 63 m2 de panneaux solaires, pourrait consommer immédiatement environ 30% de l'électricité produite par les panneaux.

Selon un premier mode de réalisation de la présente invention, l'installation comporte également une pile à combustible alimentée par l'hydrogène produit par l'électrolyseur. De plus, selon une variante avantageuse, l'hydrogène produit est entièrement destiné à alimenter la pile à combustible, et donc à produire de l'électricité. Il est intéressant de préciser toutefois qu'en raison des pertes liées à l'utilisation de l'électrolyseur et de la pile à combustible, les 30% d'électricité fournie directement par les moyens pour produire de l'électricité à partir d'énergie renouvelable correspondent pratiquement à la moitié du total de l'électricité fournie par une installation conforme à cette variante.

On comprendra donc que l'utilisation directe d'une partie de l'électricité, permet d'améliorer le rendement énergétique global d'une installation conforme à la présente invention. Celui-ci devrait être en moyenne supérieur de pratiquement 50% à celui d'une installation de l'art antérieur comme celle mentionnée plus haut.

Selon une variante préférée de ce premier mode de réalisation, la pile à combustible est utilisée uniquement lorsque les cellules photovoltaïques ne parviennent pas à satisfaire les besoins de l'unité consommatrice d'électricité.

Selon un deuxième mode de réalisation de la présente invention, l'hydrogène produit est prévu comme carburant pour une voiture équipée d'une pile à combustible. Comme l'hydrogène est produit uniquement à partir de l'électricité excédentaire fournie par les moyens pour générer de l'électricité à partir d'énergie renouvelable, les coûts de production du carburant pour une voiture à hydrogène s'en trouvent réduits.

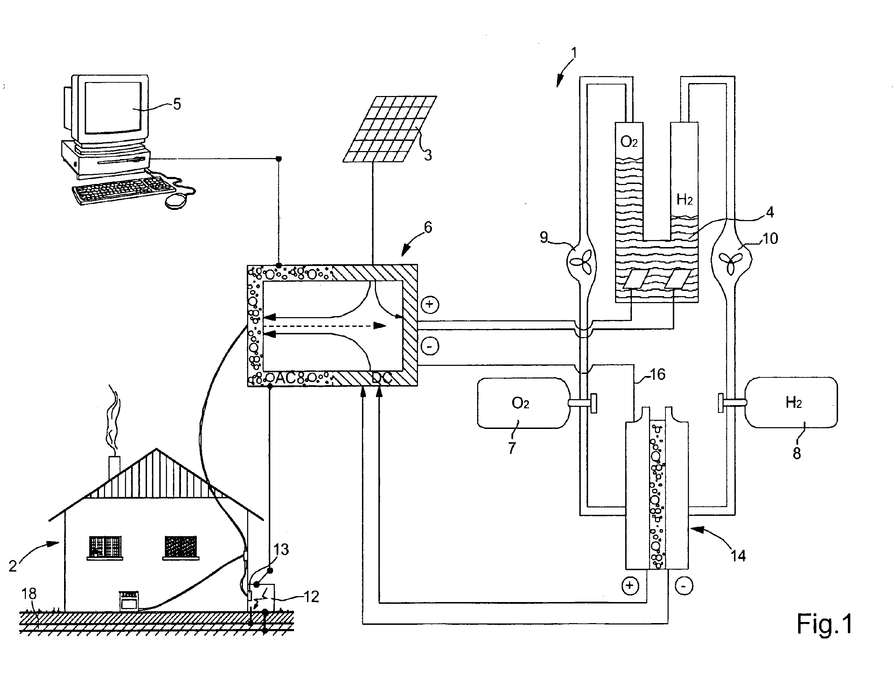

D'autre caractéristiques et avantages de la présente invention apparaîtront à la lecture de la description qui suit, donnée uniquement à titre d'exemple et faite en référence à la figure 1 annexée.

### Description sommaire des dessins

La figure 1 est le schéma de principe d'un dispositif de production et de stockage d'énergie photoélectrique associé à une pile à combustible et conforme à un mode de réalisation particulier de la présente invention.

### Description détaillée d'un mode de réalisation

En se référant à la Figure 1, on peut voir représentée une installation de production et de stockage d'énergie renouvelable 1 correspondant à un mode de réalisation particulier de la présente invention. On peut voir que cette installation 1 comprend notamment des moyens pour générer de l'électricité à partir d'énergie renouvelable 3 et un électrolyseur 4 permettant de convertir l'électricité fournie par les moyens 3 en énergie électrochimique par séparation de l'hydrogène et de l'oxygène de l'eau. De façon connue en soi, dans le présent mode de réalisation, les moyens pour générer de l'électricité à partir d'énergie renouvelable sont formés d'une pluralité de cellules photovoltaïques assemblées sur des panneaux 3 communément appelés panneaux solaires. On comprendra toutefois, que selon une variante, les moyens 3 pourraient être constitués par exemple par une ou plusieurs éoliennes, par une génératrice entraînée par une roue ou une turbine à eau, ou par tout autre dispositif connu de l'homme du métier et permettant de produire de l'électricité à partir d'énergie renouvelable.

La Figure 1 montre encore que l'installation 1 est reliée pour alimenter une unité consommatrice d'électricité qui, dans le présent exemple, est formée par l'ensemble des installations électriques qui équipent une maison individuelle 2. Bien évidemment, au lieu des installations électriques équipant une maison individuelle 2, il pourrait s'agir tout aussi bien, par exemple, des installations électriques équipant un bâtiment public, un hôpital ou encore une fabrique, etc. La maison 2 est prévue pour être alimentée non seulement par l'installation 1 mais également pour être co-alimentée par un réseau 18 exploité par un fournisseur d'électricité.

On voit encore sur la Figure 1 que l'installation 1 comprend en outre une unité centrale de dérivation 6 qui reçoit l'électricité produite par les panneaux solaires 3. L'unité centrale 6 est prévue pour recevoir des consignes à partir d'un interface utilisateur 5 pour, notamment, gérer la répartition de l'énergie fournie par les panneaux solaires 3 entre la maison 2 et l'électrolyseur 4.

Les panneaux solaires 3 fournissent de l'électricité en courant continu alors que les installations électriques qui équipent la maison sont, de façon habituelle, prévues pour fonctionner sous courant alternatif. C'est la raison pour laquelle un onduleur (non représenté) est encore prévu dans l'unité centrale 6. Grâce à cet onduleur, l'unité centrale de dérivation 6 est en mesure de fournir à la maison 2 un courant alternatif dont la phase et la tension sont compatible avec celles du réseau.

Conformément à la présente invention, l'électricité fournie par les panneaux solaires 3 est consacrée en priorité à satisfaire les besoins en électricité de la maison 2. Ce n'est que la part d'électricité en surplus, ou autrement dit la puissance produite en excès de la puissance raccordée de la maison 2 qui est dérivée vers l'électrolyseur 4 pour être stockée sous forme d'énergie électrochimique. Par « puissance raccordée » (« connected load » en anglais), on entend les besoins en électricité à un instant donné de l'ensemble des installations électriques équipant la maison 2. On comprendra donc en particulier que, tout comme la puissance produite par les panneaux solaires 3, la puissance raccordée est une grandeur qui fluctue avec le temps. La consommation de la maison individuelle 2 n'étant pas régulière au cours d'une journée, les besoins sont variables en fonction d'un certain nombre de paramètres. En effet, dans une habitation, les besoins en électricité sont différents selon que l'on se trouve en saison estivale ou hivernale, selon l'heure de la journée ou selon le nombre d'occupants se trouvant à l'intérieur de l'habitation. Ainsi, en hiver où la luminosité est la plus faible et la température extérieure est la plus froide, les besoins en éclairage et en chauffage sont les plus élevés. Les besoins en courant électrique de l'habitation sont alors plus important qu'en été, la où la luminosité naturelle est la plus élevée et où la température extérieure est la plus élevée.

Selon les statistiques suisses déjà mentionnées, les besoins en électricité d'une maison individuelle typique s'élèvent annuellement à environ 5'400 kWh. D'autre part, 63 m² de panneaux solaires produisent annuellement en moyenne environ 8'580 kWh. Naturellement, un inconvénient de l'énergie solaire est qu'elle n'est le plus souvent pas produite au moment où on en a besoin (en particulier, il est évident qu'aucune énergie solaire ne peut être produite la nuit lorsqu'on en aurait besoin pour l'éclairage). Néanmoins, selon les statistiques déjà mentionnées, 2'480 kWh d'électricité produite annuellement par les 63 m² de panneaux solaires le sont au moment où la maison en a besoin. Cette électricité qui est absorbée directement par la puissance raccordée correspond à presque 30% des 8'580 kWh d'électricité produite annuellement par ces panneaux solaires. Conformément à la présente invention, le solde de l'électricité produite, soit environ 70% de celle-ci, est dirigé vers l'électrolyseur 4 par l'unité centrale de dérivation 6.

De façon connue, l'électrolyseur 4 utilise l'électricité pour produire de l'hydrogène et de l'oxygène à partir de l'eau. L'hydrogène et l'oxygène sont ensuite stockés sous pression dans deux réservoirs 7 et 8. Deux compresseurs, référencés 9 et 10, permettent de comprimer le gaz dans les réservoirs 7, 8 jusqu'à une pression élevée (350 bars dans le présent exemple). On comprendra que l'hydrogène qui remplit l'un des réservoirs (référencé 8) convient pour être utilisé comme carburant. De plus, on sait que ce gaz constitue un carburant qui n'est en principe pas polluant. Grâce au stockage de l'hydrogène sous pression, l'installation 1 est en mesure de fournir du carburant, et donc de permettre la production d'énergie, en tout temps. Par transformation de l'énergie solaire en hydrogène, l'installation 1 permet donc le stockage non polluant de l'énergie solaire sans recours à des batteries beaucoup plus onéreuses.

On voit encore sur la Figure 1 que, dans le présent mode de réalisation, l'installation 1 stocke également l'oxygène produit par l'électrolyseur. Comme on le verra plus loin, le fait d'être en mesure de fournir, non seulement de l'hydrogène, mais également de l'oxygène peut être avantageux notamment lorsque les gaz fournis par l'installation 1 sont prévus pour alimenter certains types de piles à combustible.

Comme on l'a déjà dit, la maison 2 est prévue pour être alimentée non seulement par l'installation 1 mais également par le réseau électrique 18. Dans le présent exemple, la fonction du raccordement de la maison au réseau est principalement de permettre de compléter l'approvisionnement en électricité de la maison 2, lorsque la puissance électrique fournie par l'installation 1 n'est pas suffisante. Comme on peut le vérifier sur le dessin, le raccordement de la maison 2 au réseau électrique 18 est réalisé au niveau d'un boîtier qui est référencé 12. De façon connue, un compteur électrique est habituellement installé dans la maison 2, juste en amont du boîtier 12, pour mesurer la quantité d'énergie électrique fournie par le réseau.

Selon la présente invention, l'unité centrale de dérivation 6 est reliée à un détecteur de courant (13), qui peut être associé au compteur électrique de la maison, et qui est prévu pour mesurer les flux de puissance électrique entrant et sortant de la maison 2. Grâce aux informations fournies par le capteur de courant, l'unité centrale de dérivation est en mesure d'assurer que la puissance fournie par l'installation 1 à la maison 2 ne dépasse par la puissance raccordée. En effet, dans l'hypothèse où la puissance électrique fournie par l'installation 1 dépasse la puissance raccordée, l'excédent d'électricité est transmis de la maison au réseau. Ce flux d'énergie quittant la maison est immédiatement signalé par le détecteur 13. Ce signalement amène l'unité centrale de dérivation à accroître la part de l'électricité qui est dérivée vers l'électrolyseur 4. À l'inverse, dès que la puissance électrique fournie par l'installation 1 ne suffit plus à couvrir les besoins de la maison, le manque est comblé par de l'électricité fournie par le réseau. Ce flux d'énergie entrant dans la maison est immédiatement signalé par le détecteur 13, et ce signalement amène l'unité centrale de dérivation à diminuer la part de l'électricité qui est dérivée vers l'électrolyseur 4. De cette manière les flux d'énergie entre la maison et le réseau peuvent être ramenés exactement à zéro, pour autant que la puissance électrique produite par les panneaux solaires à cet instant soit au moins égale à la puissance raccordée.

On peut voir sur la figure 1 que l'installation 1 du présent exemple comprend encore une pile à combustible 14. La pile à combustible 14 est prévue pour produire de l'électricité à partir d'hydrogène et d'oxygène. À cet effet, la pile 14 est reliée aux réservoirs de gaz sous pression 7 et 8. On comprendra que, dans le présent exemple, l'oxygène et l'hydrogène produits par l'électrolyse sont prévus pour permettre la production d'électricité à la demande. L'électricité produite par la pile 14 pourra par exemple être fournie à la maison 2 dans les moments où la puissance électrique produite par les panneaux solaires 3 est inférieure à la puissance raccordée dans la maison.

On voit encore sur la figure 1, qu'une ligne de commande 16 relie l'unité centrale 6 à la pile à combustible 14. Dans ces conditions, il est par exemple possible de commander la mise en marche de la pile 14 lorsque, d'une part, toute l'électricité produite par les panneaux solaires est fournie à la maison et que, de plus, le capteur de courant indique qu'un flux d'énergie entre dans la maison à partir du réseau. En effet, le fait que le réseau soit mis à contribution indique que l'électricité fournie par les panneaux solaires ne suffit pas à satisfaire les besoins. Le besoin d'une source additionnelle d'électricité se fait donc sentir.

De nombreux fournisseurs d'électricité pratiquent des tarifs différentiés selon l'heure de la journée. Dans ces conditions, selon une variante avantageuse du présent exemple, la pile à combustible est mise en marche uniquement si l'heure de la journée correspond à une période où le prix de l'électricité du réseau est élevé.

On comprendra en outre que diverses modifications et/ou améliorations évidentes pour un homme du métier peuvent être apportées au mode de réalisation qui vient d'être décrit sans sortir du cadre de la présente invention définie par les revendications annexées. En particulier, au lieu d'utiliser une pile à combustible d'un type devant être alimenté en oxygène aussi bien qu'en hydrogène, il serait naturellement possible d'utiliser une pile à combustible alimentée uniquement en hydrogène et tirant son oxygène de l'air ambiant.

De plus selon une autre variante, il peut être avantageusement prévu que le système soit programmé pour d'une part envoyer sur le réseaux du fournisseur pendant les heures à tarif élevé, l'électricité produite par l'installation 1, afin que le fournisseur achète cette électricité, là où elle est la plus chère et d'autre part, pour produire, pendant les heures à tarif bas, lorsque l'électricité est la moins chère, de l'hydrogène et de l'oxygène par électrolyse en utilisant l'électricité fournie par le réseau.

Selon un second mode de réalisation, la pile à combustible 14 de l'installation 1 pourrait être remplacée par un système de ravitaillement (non représenté) pour un véhicule (non représenté) fonctionnant en utilisant l'hydrogène comme carburant. Ce véhicule pourrait notamment être un véhicule à propulsion électrique tirant son électricité d'une pile à combustible. Dans ces conditions, le véhicule viendrait se raccorder au réservoir d'hydrogène de l'installation, qui serait équipé de moyens de ravitaillement prévus pour transvaser l'hydrogène contenu dans le réservoir (8) dans un réceptacle du véhicule.

On comprendra que selon la présente invention, grâce au principe de répartition de l'électricité produite par les panneaux solaires entre l'alimentation directe de la maison 2 et la production d'hydrogène, le coût de revient de l'hydrogène est réduit par rapport à l'hydrogène produit par une installation de l'art antérieur. De plus, la possibilité de disposer d'hydrogène d'origine renouvelable à prix réduit permet de réduire de coût de revient d'une voiture écologique fonctionnant à l'hydrogène.

## Revendications

1. Installation de production et de stockage d'énergie renouvelable (1) prévue pour co-alimenter une unité consommatrice d'électricité (2) raccordée au réseau (18), ladite installation comportant des moyens pour générer de l'électricité à partir d'énergie renouvelable (3), un onduleur pour convertir l'électricité fournie à ladite installation en un courant alternatif compatible avec ledit réseau, une unité de production d'hydrogène comprenant un électrolyseur (4) prévu pour produire de l'hydrogène et de l'oxygène lorsqu'il est alimenté par lesdits moyens pour générer de l'électricité à partir d'énergie renouvelable, un réservoir (8), et un compresseur (10) pour injecter l'hydrogène fourni par l'électrolyseur dans le réservoir ;
lesdits moyens pour générer de l'électricité à partir d'énergie renouvelable étant prévus pour fournir l'électricité qu'il produisent en priorité à ladite unité consommatrice d'électricité jusqu'à concurrence de la puissance raccordée de cette dernière, une unité de dérivation (6) étant connectée en sortie desdits moyens pour générer de l'électricité, de manière à diriger vers l'électrolyseur le solde d'électricité produite lorsque la puissance produite par lesdits moyens pour générer de l'électricité à partir d'énergie renouvelable dépasse ladite puissance raccordée; l'installation étant **caracterisée en ce qu'**elle comprend un détecteur (13) prévu pour mesurer la puissance électrique fournie par ledit réseau à ladite unité consommatrice d'energie, et **en ce que** lesdits moyens de dérivation sont prévus pour diriger de l'électricité vers l'électrolyseur uniquement lorsque ladite puissance mesurée par ledit détecteur est négative ou nulle.

2. Installation selon la revendication 1, caractérisée en ce lesdits moyens de dérivation sont prévus pour ramener ou maintenir ladite puissance électrique mesurée à zéro.

3. Installation selon la revendication 1 ou 2, **caractérisée en ce que** l'hydrogène produit par l'unité de production d'hydrogène est prévu pour alimenter une pile à combustible.

4. Installation selon la revendication 3, **caractérisée en ce que** l'hydrogène produit par l'unité de production d'hydrogène est prévu pour alimenter la pile à combustible d'une voiture, et **en ce que** ladite installation comprend des moyens de transvasement de l'hydrogène pour transvaser l'hydrogène contenu dans ledit réservoir dans un réceptacle de la voiture.

5. Installation selon la revendication 3, **caractérisée en ce que** ladite pile à combustible est fixe est fait partie de ladite installation, et **en ce que** ladite pile à combustible est prévue pour fournir l'électricité qu'elle produit à ladite unité consommatrice d'électricité lorsque la puissance produite par lesdits moyens pur générer de l'électricité à partir d'énergie renouvelable est inférieure à la puissance raccordée de ladite unité.

6. Installation selon les revendications 2 et 5, **caractérisée en ce qu'**elle est prévue pour commander la mise en marche de la pile à combustible lorsque ladite puissance mesurée par le détecteur est positive, et cela uniquement durant les heures où le coût de l'électricité du réseau est élevé.

7. Installation selon la revendication 4, **caractérisée en ce qu'**elle comprend un redresseur permettant d'alimenter l'électrolyseur avec l'électricité du réseau pour augmenter la quantité d'hydrogène contenue dans le réservoir uniquement lorsque le coût de l'électricité du réseau est bas.

8. Installation selon l'une des revendications précédentes, **caractérisée en ce que** l'unité de production d'hydrogène comprend un second réservoir, et un second compresseur pour injecter l'oxygène fourni par l'électrolyseur dans le second réservoir.

9. Installation selon la revendication 8, **caractérisée en ce que** l'oxygène et l'hydrogène produit par l'électrolyseur sont prévus pour alimenter une pile à combustible.

10. Installation selon l'une des revendications précédentes, **caractérisée en ce que** lesdits moyens pour générer de l'électricité à partir d'énergie renouvelable sont des panneaux solaires photovoltaïques.

## Patentansprüche

1. Anlage zum Erzeugen und Speichern erneuerbarer Energie (1), die vorgesehen ist, eine elektrische Verbrauchereinheit (2), die mit dem Netz (18) verbunden ist, mit zu versorgen, wobei die Anlage umfasst: Mittel, um Elektrizität aus erneuerbarer Energie (3) zu erzeugen, einen Wechselrichter, um an die Anlage gelieferte Elektrizität in Wechselstrom umzusetzen, der mit dem Netz kompatibel ist, eine Einheit für die Erzeugung von Wasserstoff, die einen Elektrolyseur (4) enthält, der dazu vorgesehen ist, Wasserstoff und Sauerstoff zu erzeugen, wenn er durch die Mittel versorgt wird, um Elektrizität anhand erneuerbarer Energie zu erzeugen, einen Vorratsbehälter (8) und einen Kompressor (10), um Wasserstoff, der von dem Elektrolyseur geliefert wird, in den Vorratsbehälter einzuleiten;
wobei die Mittel zum Erzeugen von Elektrizität aus erneuerbarer Energie vorgesehen sind, die Elektrizität, die sie erzeugen, mit Vorrang an die elektrische Verbrauchereinheit bis zum Anschlusswert dieser Letzteren zu liefern, wobei eine Stromabzweigungseinheit (6) mit dem Ausgang der Mittel zum Erzeugen von Elektrizität verbunden ist, derart, dass der Saldo der Elektrizität, die erzeugt wird, wenn die von den Mitteln zum Erzeugen von Elektrizität aus erneuerbarer Energie erzeugte Leistung die verbrauchte Leistung überschreitet, zu dem Elektrolyseur geleitet wird; wobei die Anlage **dadurch gekennzeichnet ist, dass** sie einen Detektor (13) umfasst, der vorgesehen ist, die von dem Netz an die elektrische Verbrauchereinheit gelieferte elektrische Leistung zu messen, und dass die Stromabzweigungsmittel vorgesehen sind, Elektrizität nur dann zu dem Elektrolyseur zu leiten, wenn die von dem Detektor gemessene Leistung negativ oder null ist.

2. Anlage nach Anspruch 1, **dadurch gekennzeichnet, dass** die Stromabzweigungsmittel vorgesehen sind, die gemessene elektrische Leistung auf null zurückzustellen oder auf null zu halten.

3. Anlage nach Anspruch 1 oder 2, **dadurch gekennzeichnet, dass** der durch die Wasserstofferzeugungseinheit erzeugte Wasserstoff vorgesehen ist, eine Brennstoffzelle zu versorgen.

4. Anlage nach Anspruch 3, **dadurch gekennzeichnet, dass** der von der Wasserstofferzeugungseinheit erzeugte Wasserstoff vorgesehen ist, die Brennstoffzelle eines Fahrzeugs zu versorgen, und dass die Anlage Wasserstoffumfüllmittel umfasst, um den Wasserstoff, der in dem Vorratsbehälter enthalten ist, in einen Aufnahmebehälter des Fahrzeugs umzufüllen.

5. Anlage nach Anspruch 3, **dadurch gekennzeichnet, dass** die Brennstoffzelle fest ist und einen Teil der Anlage bildet und dass die Brennstoffzelle vorgesehen ist, um Elektrizität, die sie erzeugt, an die elektrische Verbrauchereinheit zu liefern, wenn die durch die Mittel zum Erzeugen von Elektrizität aus erneuerbarer Energie erzeugte Leistung niedriger als der Anschlusswert der Einheit ist.

6. Anlage nach den Ansprüchen 2 und 5, **dadurch gekennzeichnet, dass** sie vorgesehen ist, ausschließlich während der Zeit, in der die Kosten für Elektrizität des Netzes hoch sind, die Inbetriebnahme der Brennstoffzelle zu steuern, wenn die von dem Detektor gemessene Leistung positiv ist.

7. Anlage nach Anspruch 4, **dadurch gekennzeichnet, dass** sie einen Gleichrichter umfasst, der ermöglicht, den Elektrolyseur nur dann, wenn die Kosten der Elektrizität des Netzes niedrig sind, mit Elektrizität des Netzes zu versorgen, um die Menge von Wasserstoff, die in dem Vorratsbehälter enthalten ist, zu erhöhen.

8. Anlage nach einem der vorhergehenden Ansprüche, **dadurch gekennzeichnet, dass** die Wasserstofferzeugungseinheit einen zweiten Vorratsbehälter und einen zweiten Kompressor, um Sauerstoff, der von dem Elektrolyseur geliefert wird, in den zweiten Vorratsbehälter einzuleiten, umfasst.

9. Anlage nach Anspruch 8, **dadurch gekennzeichnet, dass** der Sauerstoff und der Wasserstoff, die von dem Elektrolyseur erzeugt werden, vorgesehen sind, um eine Brennstoffzelle zu versorgen.

10. Anlage nach einem der vorhergehenden Ansprüche, **dadurch gekennzeichnet, dass** die Mittel zum Erzeugen von Elektrizität anhand erneuerbarer Energie Photovoltaik-Solarpanele sind.

## Claims

1. Installation for the production and storage of renewable energy (1) provided for jointly supplying an electricity-consuming unit (2) connected to the grid (18), said installation comprising means for generating electricity from renewable energy (3), an inverter to convert the electricity supplied by said installation to an alternating current compatible with said grid, a hydrogen production unit comprising an electrolyser (4) provided to produce hydrogen and oxygen when powered by said means for generating electricity from renewable energy, a tank (8), and a compressor (10) for injecting the hydrogen provided by the electrolyser into the tank;
said means for generating electricity from renewable energy being provided to supply the energy which they produce to the energy consumption unit as a priority until the connected load of this unit is reached, a branch connection unit (6) being connected to the output of said means for generating electricity, in such a way as to direct to the electrolyser the remainder of the electricity produced when the power produced by said means for generating electricity from renewable energy exceeds said connected load; the installation being **characterised in that** it comprises a detector (13) provided to measure the electrical power supplied by said grid to said electricity-consuming unit and **in that** said branch connection means are provided to direct electricity to the electrolyser only when said power measured by said detector is negative or zero.

2. Installation according to claim 1, **characterised in that** said branch connection means are provided to bring said measured electrical power to zero or to keep it at zero.

3. Installation according to either claim 1 or claim 2, **characterised in that** the hydrogen produced by the hydrogen production unit is provided to supply a fuel cell.

4. Installation according to claim 3, **characterised in that** the hydrogen produced by the hydrogen production unit is provided to supply the fuel cell of a car, and **in that** said installation comprises hydrogen transfer means for transferring the hydrogen contained in said tank into a container of the vehicle.

5. Installation according to claim 3, **characterised in that** said fuel cell is fixed and is part of said installation, and **in that** said fuel cell is provided to supply the electricity which it produces to said electricity-consuming unit when the power produced by said means for generating electricity from renewable energy is less than the connected load of said unit.

6. Installation according to claims 2 and 5, **characterised in that** it is provided to instruct the fuel cell to start up when said power measured by the detector is positive, and only at times when the cost of electricity from the grid is high.

7. Installation according to claim 4, **characterised in that** it comprises a rectifier which makes it possible to supply the electrolyser with the electricity from the grid, so as to increase the amount of hydrogen contained in the tank, only when the cost of the electricity from the grid is low.

8. Installation according to any one of the preceding claims, **characterised in that** the hydrogen production unit comprises a second tank and a second compressor for injecting the oxygen provided by the electrolyser into the second tank.

9. Installation according to claim 8, **characterised in that** the oxygen and hydrogen produced by the electrolyser are provided to supply a fuel cell.

10. Installation according to any one of the preceding claims, **characterised in that** said means for generating electricity from renewable energy are photovoltaic solar panels.
